# EUROPÄISCHE PATENTSCHRIFT

(11) **EP 1 151 889 B1**
(45) Veröffentlichungstag und Bekanntmachung des Hinweises auf die Patenterteilung: **30.03.2005**
(21) Anmeldenummer: 01109658.3
(22) Anmeldetag: 19.04.2001
(51) Int. Cl.: B60K 35/00, B60K 31/18

(54) **Anzeigeeinrichtung**
Display device
Dispositif afficheur

(30) Priorität: 05.05.2000 DE 10021874
(43) Veröffentlichungstag der Anmeldung: 07.11.2001
(73) Patentinhaber: Bayerische Motoren Werke Aktiengesellschaft, 80809 München (DE)
(72) Erfinder: Aman, Richard, 86415 Mering (DE)

(56) Entgegenhaltungen:
- WO-A-86/00049
- WO-A-97/42466
- DE-A- 19 737 679
- DE-A- 19 850 686

## Beschreibung

Die Erfindung betrifft eine Anzeigeeinrichtung gemäß dem Oberbegriff des Anspruchs 1.

Anzeigeeinrichtungen mit Skalen, die auf graphische Weise Informationen darstellen, werden in vielen Bereichen der Technik eingesetzt und informieren Personen über die verschiedensten Zustände von Maschinen und Geräten. Ein besonderer Anwendungsbereich ist im Kraftfahrzeugbereich gegeben, wo Fahrzeugsbetriebsbedingungen über Anzeigeeinrichtungen dem Fahrzeugbediener vermittelt werden. Die vorliegende Erfindung wird mit Bezug auf das Kraftfahrzeuggebiet beschrieben, jedoch sollten die beispielhaften Erläuterungen nicht einschränkend verstanden werden.

Die Anzeigeeinrichtungen können vielfältig ausgestaltet sein. Es gibt digitale und analoge Anzeigegeräte. Bei digitalen Anzeigegeräten wird meist eine Darstellung mittels Ziffern bevorzugt. Bei analogen Anzeigegeräten werden insbesondere Zeigerinstrumente eingesetzt, wobei ein irgendwie ausgestalteter Zeiger je nach Betriebsbedingung über eine Skala verfährt.

Die vorliegende Erfindung ist auf ein Zeigeranzeigegerät gerichtet. Dabei kann der Zeiger in Form einer Zeigernadel, eines Lichtbalkens oder in irgendeiner anderen Form realisiert sein. Ausschlaggebend ist lediglich, dass eine Bewegung des Zeigers über einen Skalenbereich stattfindet.

Bei Fahrzeugen beispielsweise, wird herkömmlicher Weise die Geschwindigkeit, sowie die Drehzahl mit solchen Zeigerinstrumenten dargestellt. Bei modernen Fahrzeugen ist es nun möglich, eine Wunschgeschwindigkeit einzustellen, die dann von einem Fahrtregelsystem eingehalten wird. Ein Problem kann sich dann ergeben, wenn der Bediener verschiedene Wunschwerte auswählen und einstellen will. Überdies kann der Bediener die Wunschgeschwindigkeiten immer nur relativ ungenau eingeben, da man am Zeiger nicht immer den eingestellten Wert ablesen kann. Das Einstellen verschiedener Marker für ein Fahrtregelsystem in einer Anzeigeeinrichtung ist beispielsweise aus der DE 198 50 686 bekannt.

Aufgabe der vorliegenden Erfindung ist es, eine Anzeigeeinrichtung der eingangs genannten Art dahin weiterzuentwickeln, dass ein aus dem Anzeigespektrum der Anzeigeeinrichtung manuell auswählbarer Wert, auf übersichtliche und eingängige Weise genau darstellbar ist.

Diese Aufgabe wird durch die im Anspruch 1 genannten Merkmale gelöst.

Erfindungswesentlich dabei ist, dass eine Information aus dem Skalen-Bereich der Anzeigeeinheit, welche manuell wählbar ist, mit der Anzeigeeinheit einblendbar ist, wobei sich die Position der zusätzlich dargestellten Information in Abhängigkeit von dem manuell eingegebenen Wert verändert. Eine solche Anzeigeeinheit kann sehr einfach mit einem Bildschirmdisplay realisiert werden. Auf dem Bildschirmdisplay können alle Informationen in gewünschter Weise variabel dargestellt werden.

Vorzugsweise wird die Zahlenangabe innerhalb eines Fensters, insbesondere mit einer Umrandung dargestellt. Dadurch hebt sich die zusätzlich dargestellte Information gegenüber den übrigen Informationen auf der Skala ab.

Zur besseren Erkennung der zusätzlichen graphischen Information, kann der Bereich der Skala, in dem diese Information angezeigt wird, mit kleinerem Kontrast oder abgedunkelt dargestellt werden.

Die erfindungsgemäße Anzeigeeinrichtung eignet sich beispielsweise für die Verwendung bei einem Tachometer, bei dem als zusätzliche Information die Wunschgeschwindigkeit für ein Fahrtregelsystem anzugeben ist. Die zusätzliche Information, die in Form einer Zahlenangabe vorliegt, kann - insbesondere positionsmäßig - einem zusätzlichen Zeigerelement zugeordnet sein. Dieses zusätzliche Zeigerelement gibt beispielsweise bei der Verwendung in einem Tachometer die Wunschgeschwindigkeit an. Dabei wird die zusätzliche Information in Form der Zahlenangabe, vorzugsweise beim Einstellvorgang der Wunschgeschwindigkeit, angezeigt. Ist die Wunschgeschwindigkeit dann eingestellt, so wird die zusätzliche Information wieder ausgeblendet. Gemäß einer Ausführungsform bleibt dann lediglich das zusätzliche Zeigerelement übrig, dass eine ausreichend genaue Angabe der Wunschgeschwindigkeit vermittelt und als Marker dient. Damit kann ein Fahrer beispielsweise sehr genau seine Wunschgeschwindigkeit eingeben.

Eine besonders bevorzugte Ausführungsform ist dadurch gekennzeichnet, dass die Zahlenangabe derart dargestellt wird, dass sie vom ersten Zeigerelement nicht verdeckt wird. Insbesondere kann die zusätzliche Information, also die Zahlenangabe, links oder rechts des ersten Zeigerelements dargestellt werden. Für den Fall, dass sich die Fahrgeschwindigkeit während der Einstellung der Wunschgeschwindigkeit parallel zu dieser ändert, würde die zusätzliche Information zusammen mit dem ersten Zeigerelement in Richtung einer langsameren oder schnelleren Geschwindigkeit wandern.

Eine Ausführungsform der vorliegenden Erfindung ist nachfolgend dargestellt und wird mit Bezug auf die einzige beiliegende Zeichnung näher erläutert.

Die einzige beiliegende Zeichnung zeigt ein schematisches Blockdiagramm einer Ausführungsform der Erfindung.

Das vorliegende Ausführungsbeispiel ist auf ein Fahrtregelsystem bezogen, welches beispielsweise bei einem Personenkraftwagen eingesetzt ist. Es umfasst eine Anzeigeeinheit 16, welche als Bildschirmdisplay ausgebildet ist und von einer Steuereinrichtung 12 beaufschlagt wird. Auf dem Bildschirmdisplay können alle gewünschten Informationen variabel dargestellt werden. Die Steuereinrichtung 12 erhält Eingangsinformationen unter anderem von einem Geber 11, der mit einem Lenkstockhebel 10 verbunden ist. Andere der Steuereinheit 12 zur Verfügung gestellte Daten, wie beispielsweise Fahrzeuggeschwindigkeits- oder Raddrehzahlinformationen sind vorliegend aus Übersichtlichkeitsgründen nicht dargestellt.

Die Steuereinrichtung 12 wertet die vom Lenkstockhebel 10 bzw. dessen Geber 11 kommenden Signale aus und gibt entsprechende Befehle an eine Motorsteuerung 14 weiter. Die Motorsteuerung 14 betreibt dann in an sich bekannter Weise einen Motor 30 eines Fahrzeugs, um die gewählte Fahrzeug-Wunschgeschwindigkeit beizubehalten.

Der Lenkstockhebel 10 kann zum einen in Fahrtrichtung (Pfeil 24), entgegengesetzt zur Fahrtrichtung (Pfeil 22) sowie in axialer Richtung (Pfeil 20) betätigt werden. Durch die Betätigung des Lenkstockhebels 10 in axialer Richtung (Pfeil 20) kann für eine momentan gefahrene Geschwindigkeit, eine Geschwindigkeitsmarkierung gewählt werden. Der Motor 30 des Fahrzeugs wird dann über die Motorsteuerung 14 auf das Einhalten dieser Geschwindigkeit hin gesteuert. Gleichzeitig wird eine entsprechende Geschwindigkeitsmarke 15 über die Steuereinrichtung 12 in der Anzeigeeinheit 16 gesetzt, wie nachfolgend noch erläutert wird. Durch einfaches Betätigen des Lenkstockhebels 10 in Richtung der Pfeile 24 oder 22 kann die Wunschgeschwindigkeit erhöht oder verringert werden.

Auf dem als Anzeigeeinheit 16 dienenden Bildschirmdisplay ist eine Skala von 0 bis 260 (Bezugszeichen 18) dargestellt, welche die jeweils gefahrenen Geschwindigkeitswerte angibt. Ferner ist ein Zeiger 17 vorgesehen, der in Abhängigkeit von der ermittelten Fahrgeschwindigkeit auf einen entsprechenden Skalenwert eingestellt ist.

Neben dem Zeiger 17 ist eine in etwa halbkreisförmig ausgebildete Lichtleiste 13 angeordnet, in der ein Lichtzeiger 15 aktivierbar ist, welcher im Bereich der Lichtleiste verfahren werden kann. Der Lichtzeiger 15 gibt eine eingestellte Wunschgeschwindigkeit für das Fahrtregelsystem wieder. Zusätzlich zu dem Lichtzeiger 15 ist eine zusätzliche Geschwindigkeitsangabe 19 eingeblendet, die einen gerade einzustellenden Wunschgeschwindigkeitswert innerhalb einer Umrandung zeigt. Die zusätzliche Geschwindigkeitsangabe erscheint vorliegend lediglich beim Einstellen der Wunschgeschwindigkeit und erlischt sodann, so dass bei eingestellter Wunschgeschwindigkeit lediglich der Lichtzeiger 15 bestehen bleibt und dem Fahrer eine diesbezügliche Information liefert.

Die zusätzliche Geschwindigkeitsangabe 19 ist positionsmäßig dem Lichtzeiger 15 zugeordnet und verschiebt sich mit diesem über die Anzeigeeinheit 16. Damit eine einfache Ablesung ermöglicht wird, werden im Bereich der zusätzlichen Geschwindigkeitsangabe 19 die normalen Skalierungsangaben 18 dunkel geschaltet, und zwar so, dass sie gerade noch ablesbar sind. Zudem ist die zusätzliche Geschwindigkeitsangabe 19 so angeordnet, dass sie vom Zeiger 17 nicht verdeckt wird. Die Angabe lässt sich vorliegend in Einerschritten verändern. Alternativ können jedoch auch andere Schrittgrößen gewählt werden, fall dies gewünscht wird.

Nach dem Einstellen einer Fahrzeug-Wunschgeschwindkeit erlischt die zusätzliche Zahlenangabe 19 und die in diesem Bereich vorhandene Skalierung wird wieder normal geschalten.

Bei einem Fahrtregelsystem, welches auch selbständig bei einem zu kurzem Abstand zum Vordermann abbremst (Adaptive Cruise Control), können der Zeiger 17 sowie der Lichtzeiger 15 auseinander fallen, wobei der Zeiger 17 sich geschwindigkeitsmäßig immer unterhalb des Lichtzeigers 15 befindet.

Die vorliegende Erfindung gestattet es allgemein, aus einem Skalenbereich ausgewählte Wunschwerte manuell genau einzustellen und ist nicht auf das vorliegende Ausführungsbeispiel beschränkt. Zudem besitzt sie eine hohe Funktionalität, da die Information genau dort dargestellt wird, wo sie hingehört und wo der Kunde sie erwartet.

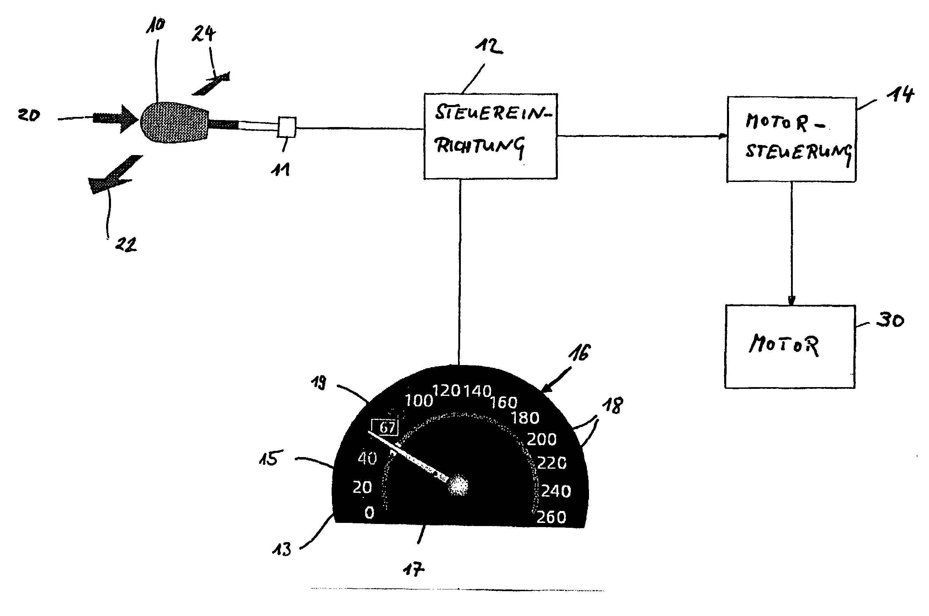

## Patentansprüche

1. Anzeigeeinrichtung mit einer von einer Steuereinrichtung (12) beaufschlagten Anzeigeeinheit (16), die eine Skala (18) mit graphischen Informationen und ein erstes Zeigerelement (17) umfaßt, das in Abhängigkeit von zumindest einem an die Steuereinheit abgegebenen Eingangsparameter automatisch auf eine Position der Skala (18) ausrichtbar ist,
**dadurch gekennzeichnet,**
**daß** eine zusätzliche manuell veränderbare Zahlenangabe (19) mit der Anzeigeeinheit (16) einblendbar ist, die sich in Abhängigkeit des manuell eingegebenen Wertes bezüglich ihrer Position verändert.

2. Anzeigeeinrichtung nach Anspruch 1,
**dadurch gekennzeichnet,**
**dass** als Anzeigeeinheit (16) ein Bildschirmdisplay verwendet ist.

3. Anzeigeeinrichtung nach Anspruch 1 oder 2,
**dadurch gekennzeichnet,**
**dass** die Zahlenangabe (19) innerhalb eines Fensters angezeigt ist.

4. Anzeigeeinrichtung nach Anspruch 3,
**dadurch gekennzeichnet,**
**dass** das Fenster mit einer Umrandung versehen ist.

5. Anzeigeeinrichtung nach einem der vorhergehenden Ansprüche,
**dadurch gekennzeichnet,**
**dass** die graphischen Informationen der Skala (18) im Bereich der zusätzlichen Zahlenangabe (19) mit kleinerem Kontrast oder abgedunkelt darstellbar sind.

6. Anzeigeeinrichtung nach einem der vorhergehenden Ansprüche,
**dadurch gekennzeichnet,**
**dass** die Anzeigeeinheit (16) ein Tachometer ist und die Zahlenangabe die Wunschgeschwindigkeit für eine Fahrtregeleinrichtung bezeichnet.

7. Anzeigeeinrichtung nach einem der vorhergehenden Ansprüche,
**dadurch gekennzeichnet,**
**dass** die Zahlenangabe (19) einem zusätzlichen Zeigerelement (15) zugeordnet ist.

8. Anzeigeeinrichtung nach Anspruch 7,
**dadurch gekennzeichnet,**
**dass** das zusätzliche Zeigerelement (15) die Wunschgeschwindigkeit angibt.

9. Anzeigeeinrichtung nach einem der vorhergehenden Ansprüche,
**dadurch gekennzeichnet,**
**dass** die Zahlenangabe derart angeordnet ist, dass sie von dem ersten Zeigerelement (17) nicht verdeckt ist.

## Claims

1. A display device comprising a display unit (16) which is acted upon by a control device (12) and comprises a scale (18) with graphical information and a first pointer element (17) which can be automatically oriented to a position on the scale (18) as a function of at least one input parameter output to the control unit, **characterised in that** an additional manually variable number indication (19) can be integrated with the display unit (16) and changes as a function of the manually input value with respect to its position.

2. A display unit according to claim 1, **characterised in that** a screen display is used as the display unit (16).

3. A display device according to claim 1 or 2, **characterised in that** the number indication (19) is displayed inside a window.

4. A display device according to claim 3, **characterised in that** the window is provided with a frame.

5. A display device according to any one of the preceding claims, **characterised in that** the graphical information of the scale (18) can be shown in the region of the additional number indication (19) with less contrast or darkened.

6. A display device according to any one of the preceding claims, **characterised in that** the display unit (16) is a tachometer and the number indication designates the desired speed for a travel control device.

7. A display device according to any one of the preceding claims, **characterised in that** the number indication (19) is associated with an additional pointer element (15).

8. A display device according to claim 7, **characterised in that** the additional pointer element (15) gives the desired speed.

9. A display device according to any one of the preceding claims, **characterised in that** the number indication is arranged in such a way that it Is not concealed by the first pointer element (17).

## Revendications

1. Dispositif afficheur comportant une unité d'affichage (16) influencée par un dispositif de commande (12), qui comprend une échelle (18) avec des informations graphiques et un premier indicateur (17) pouvant s'aligner automatiquement sur une position de l'échelle (18) en fonction d'au moins un paramètre d'entrée distribué à l'unité de commande,
**caractérisé en ce qu'**
une indication chiffrée (19) supplémentaire manuellement modifiable peut être combinée avec l'unité d'affichage (16), et se modifie sur le plan de la position en fonction de la valeur introduite manuellement.

2. Dispositif afficheur selon la revendication 1,
**caractérisé en ce que**
un affichage par écran est utilisé en tant qu'unité d'affichage (16).

3. Dispositif afficheur selon la revendication 1 ou 2,
**caractérisé en ce que**
l'indication chiffrée (19) est affichée dans une fenêtre.

4. Dispositif afficheur selon la revendication 3,
**caractérisé en ce que**
la fenêtre est pourvue d'un encadrement.

5. Dispositif afficheur selon l'une quelconque des revendications précédentes,
**caractérisé en ce que**
les informations graphiques de l'échelle (18) peuvent être représentées assombries ou avec moins de contraste dans la zone de l'indication chiffrée (19) supplémentaire.

6. Dispositif afficheur selon l'une quelconque des revendications précédentes,
**caractérisé en ce que**
l'unité d'affichage (16) est un compteur de vitesse et l'indication chiffrée désigne la vitesse souhaitée pour une direction de circulation.

7. Dispositif afficheur selon l'une quelconque des revendications précédentes,
**caractérisé en ce que**
un indicateur supplémentaire (15) est affecté à l'indication chiffrée (19).

8. Dispositif afficheur selon la revendication 7,
**caractérisé en ce que**
indicateur supplémentaire (15) indique la vitesse souhaitée.

9. Dispositif afficheur selon l'une quelconque des revendications précédentes,
**caractérisé en ce que**
l'indication chiffrée est disposée de manière telle qu'elle n'est pas recouverte par le premier indicateur (17).
